# EUROPÄISCHE PATENTSCHRIFT

(11) **EP 1 363 227 B1**
(45) Veröffentlichungstag und Bekanntmachung des Hinweises auf die Patenterteilung: **19.04.2006**
(21) Anmeldenummer: 02010933.6
(22) Anmeldetag: 16.05.2002
(51) Int. Cl.: G06K 7/00, G06K 13/08

(54) **Kartenlesevorrichtung**
Card reading device
Dispositif de lecture de cartes

(43) Veröffentlichungstag der Anmeldung: 19.11.2003
(73) Patentinhaber: Compagnie Industrielle et Financiere d'Ingenierie Ingenico, 92816 Puteaux Cedex (FR)
(72) Erfinder: Yang, Chuntei, 22339 Hamburg (DE); Schröder, Manfred, 22339 Hamburg (DE); Compain, Gérard, 92816 Puteaux (FR)
(74) Vertreter: Hirsch & Associés

(56) Entgegenhaltungen:
- DE-A- 4 402 229
- US-A- 4 141 044
- US-A- 4 833 310
- US-A- 5 036 184
- US-A- 5 331 144

## Beschreibung

Die vorliegende Erfindung betrifft eine Kartenlesevorrichtung mit einem im wesentlichen schlitzförmigen Aufnahmeraum und Schreib- und/oder Leseeinheiten für mit Speicherelementen versehene, im wesentlichen kartenförmige Datenträger, welche in den Aufnahmeraum zur Positionierung der Speicherelemente relativ zu den Schreib- und/oder Leseeinheiten mittels eines durch einen Motor angetriebenen Kartenantriebs ein- bzw. ausschiebbar sind.

Gattungsgemäß Karteniesevorrichtungen sind aus dem Stand der Technik dem Grunde nach bekannt. Solche Karteniesevorrichtungen werden in Automaten unterschiedlicher Art für bargeldlose Zahlungsabwicklungen eingesetzt, worunter auch Geldausgabemaschinen, Kartenzahlungsstationen in Geschäften, Tankstellen sowie Kartenaufladegeräte gehören, in welchen auf eine Karte ein Guthaben aufgespeichert wird. Weiterhin werden solche Karten für unterschiedliche Einsatzzwecke wie beispielsweise Telefonzellen usw. verwendet. Bei den Karten handelt es sich vorzugsweise um in wesentlichen rechteckförmige Kunststoffkarten, auf welchen Speichereinheiten angeordnet sind. Dazu gehören Magnetstreifen, Speicherchips, in jüngster Zeit aber auch kleine Mikrorechnerbausteine für interaktive Kommunikation und dergleichen, welche im Rahmen der Erfindung ebenfalls unter dem Begriff Speichereinheiten geführt werden sollen.

Es ist im Stand der Technik bekannt, daß solche Karten, beispielsweise Kreditkarten, Scheckkarten, Telefonkarten und dergleichen, mit wenigstens zwei verschiedenen Speichereinheiten versehen sind. Gängig sind derzeit Kombinationen von Magnetstreifen und Speicherchips, aber auch andere Speichereinheitenkombinationen sowie Kombinationen von mehr als zwei Speichereinheitentypen liegen im Rahmen der Erfindung.

Während Speichereinheiten wie Speicherchips eine im wesentlichen ortsfeste, ruhende Kontaktierung erforderlich machen, machen Speichereinheiten wie Magnetstreifen Relativbewegungen zwischen Speichereinheit und Schreib-/Leseeinheit des Kartenlesegerätes erforderlich.

Je nach Anwendungsgebiet und Einsatzzweck umfassen die Kartenlesegeräte Leseköpfe, Schreibköpfe oder kombinierte Schreib-/Leseköpfe. Im Rahmen der vorliegenden Anmeldung werden alle drei Möglichkeiten der Einfachheit halber unter dem Oberbegriff "Schreib-/Leseeinheit" zusammengefaßt.

Zur bestimmungsgemäßen Kartennutzung wird nun die Karte in das Kartenlesegerät eingeführt. Dabei ist es im Stand der Technik üblich, daß die Karte weitestgehend vollständig in einen schlitzartigen Aufnahmeraum eingeschoben oder eingezogen wird. Meistens folgt auf ein anfängliches Einsetzen ein automatischer Einzugsvorgang. Die Karte wird in eine vorgegebene Endposition bewegt und je nach Kartennutzungsvorgang die eine oder die andere Speichereinheit, gegebenenfalls auch beide, kontaktiert und ausgelesen und/oder beschrieben. Dabei kann der Magnetstreifen bereits während des Einzugsvorganges über den Schreib-/Lesekopf - oder einen einzelnen Schreibkopf bzw. Lesekopf - bewegt und dabei ausgelesen oder beschrieben werden. In jedem Fall jedoch wird im Stand der Technik die Karte in eine einzige Schreib-/Leseendposition bewegt und in dieser Position gegebenenfalls auch das Kontaktfeld des Speicherchips für den Datenaustausch kontaktiert.

Insbesondere bei solchen Kartenlesegeräten mit automatischem Karteneinzug handelt es sich bei der Einzugs- und Auswurfeinheit um die einzige mechanische Einheit, die auch entsprechend anfällig ist. Da Karten in einem breiten Spektrum Umwelteinflüssen ausgesetzt sind, beispielsweise fettigen Fingern. Staub, Wärme-/Kälteeinflüssen und dergleichen, und die Einzugs-/Auswurfeinheiten der Kartenlesegeräte üblicherweise über Breitgummis auf die Karten einwirken, kommt es hier zu relativ schnellen Abnutzungsvorgängen.

Darüber hinaus weisen aus dem Stand der Technik bekannte Lesegeräte eine Reihe weiterer Nachteile auf. Solche beziehen sich beispielsweise darauf, daß die einzelnen Einheiten zur sicheren Versperrung des Kartenschachtes, die Notwendigkeit der Auswurfmöglichkeit zu jedem beliebigen Zeitpunkt, kompakte Bauweise und kostengünstige jedoch robuste und unanfällige Bauweise. Es besteht daher Bedarf an verbesserten Kartenlesegeräten.

DE-A-4 402 229 offenbart eine Vorrichtung gemäß den Merkmalen des Oberbegriffs von Anspruch 1.

Ausgehend vom vorbeschriebenen Stand der Technik liegt der Erfindung die **Aufgabe** zugrunde, Kartenlesegeräte der gattungsgemäßen Art dahingehend weiterzubilden, daß diese eine Funktion aufweisen, um in jedem Zustand, auch in energielosem Zustand eine Rückgabe der Karte zu ermöglichen, einfach und kostengünstig aufgebaut sind, Gangzeiten verlängern, Verschleiß verringern, einen reduzierten Wartungs- und Reparaturaufwand bewirken.

Zur technischen **Lösung** dieser Aufgabe wird der Erfindung gemäß Anspruch 1 vorgeschlagen.

Durch die erfindungsgemäße Lösung wird nunmehr die Karte nicht mehr durch Gummiantriebselemente im Kartenschacht verfahren, sondern sie wird in einen Kartenführungsschlitten eingesetzt. Dieser kann nun auf einfache und unanfällige Weise mit einem Antrieb verbunden werden. Hier kommen Seilzüge, Stangenantriebe, Kettenantriebe, Spindelantriebe und dergleichen in Frage. Besonders vorteilhaft ist die Verwendung einer Spindelstange, die gemäß einem vorteilhaften Vorschlag der Erfindung über ein Zahnradgetriebe mit einem Elektromotor verbunden ist. Diese Ausführung kann das Kartenlesegerät nicht nur extrem dünn sondern auch sehr schmal ausgeführt werden, da es möglich ist, den Motor hinter dem eigentlichen Lesegerät anzuordnen.

In vorteilhafter Weise ist der Kartenaufnahmeschlitten so ausgebildet, daß er einen Endbereich der Karte aufnimmt. Besonders vorteilhaft kann der Schlitten mit einem Kontaktfeld zum Kontaktieren eines kartenseitigen Speicherelementes ausgestatten sein. Hierdurch ist es sogar möglich, für dieses Speicherelement eine vordere Lese-/Schreibposition zu definieren, ohne daß es überhaupt eines mechanischen Transportes der Karte bedarf. Der Schlitten ist über einen Mitnehmer in vorteilhafter Weise an einer Spindelstange angeordnet. Diese kann in beide Richtungen drehen und somit ein Einfahren und Vorfahren des Schlittens im Kartenschacht bewirken. Diese Lösung ist überaus unanfällig. Darüber hinaus kann der Schlitten entlang einer Führungsstange geführt werden. Ein Verkanten ist damit ausgeschlossen.

Weiterhin wird mit Vorteil vorgeschlagen, daß an dem Schlitten ein Klemmelement angeordnet ist, welches in dem Fall, daß die Karte in den Kartenschacht eingezogen und dort manövriert wird, die Karte festgeklemmt wird. In vorteilhafter Weise handelt es sich um ein hebelartiges Klemmelement, welches über eine Nockenbahn geführt ist. Beim Einfahren des Schlittens wird das Klemmelement durch eine Nockenbahn auf die Karte gedrückt und klemmt diese fest.

Die erfindungsgemäße Ausgestaltung ermöglicht darüber hinaus, als Zugriffssicherung in den Kartenschacht eine einfache Schlitzklappe zu verwenden. Diese ist kostengünstig und überaus sicher. Zu diesem Zweck wird sie vorzugsweise mit einem Sperrelement verriegelt, wenn die Karte eingeschoben ist. Hierbei kann es sich ebenfalls um ein über eine Nockenbahn gesteuertes Sperrelement handeln.

Eine weitere vorteilhafte Funktion wird durch den erfindungsgemäßen Aufbau eines Kartenlesegerätes ermöglicht, nämlich eine Erweiterung des Aufnahmeraumes für die Lagerung einzuziehender Karten vorzusehen. Dabei handelt es sich gemäß einem vorteilhaften Vorschlag um einen Schacht als Erweiterung zur eigentlichen Kartenschacht oder schlitzförmigen Aufnahmeraum für die Karte, der vorzugsweise in Einzugsrichtung hinter der Schreib-/Leseposition einer Karte liegt. Stellt sich beim Lesen heraus, daß die Karte ungültig ist oder aus sonstigen Gründen einzuziehen ist, verfährt der Schlitten weiter in eine hintere Position. Gemäß einem vorteilhaften Vorschlag der Erfindung wird die Karte gegen einen Anschlag gezogen, so daß der Schlitten bei weiterer Einwärtsfahrt von der Karte abgezogen wird. Die freie Karte kann dann im Inneren des Karteniesegerätes in einen Lagerschacht fallen oder weiterbefördert werden.

Die Spindelstange ermöglicht darüber hinaus, selbst bei einem Stromausfall oder einer Motorfehlfunktion oder einem sonstwie begründeten energielosen Zustand Karten aus dem Lesegerät zu entfernen. Zu diesem Zweck ragt die Spindelstange beispielsweise bis zur Gehäusevorderseite und weist beispielsweise einen Schlitz für einen Schraubendreher an der Stimkante auf. So kann selbst bei energielosem Zustand mittels eines Schraubendrehers eine Karte wieder entnehmbar positioniert werden.

Mit der Erfindung werden sehr einfache und mit geringem wirtschaftlichen Aufwand realisierbare Lösungen vorgeschlagen, welche den robusten und wirtschaftlichen Aufbau eines kompakten jedoch schlanken und schmalen Kartenlesegerätes ermöglichen.

Weitere Vorteile und Merkmale der Erfindung ergeben sich aus der folgenden Beschreibung anhand der Figuren. Dabei zeigen:
- Fig. 1: eine schematische explosionsartige Seitenansicht eines Ausführungsbeispiels der Erfindung in einer ersten Einschubposition;
- Fig. 2: eine Darstellung gemäß Fig. 1 in einer zweiten Einschubposition;
- Fig.3: eine schematische perspektivische Darstellung der Schacht-Schlitz-Sicherung;
- Fig. 4: eine Darstellung gemäß Fig. 3 in einer anderen Kartenposition;
- Fig. 5: eine Seitenansicht eines Kartentesegerätes in schematischer explosionsartiger Darstellung in einer Position zum Einzug einer illegalen Karte;
- Fig. 6: eine entsprechende bildliche Darstellung gemäß Fig. 5 und
- Fig. 7: eine Darstellung des Kartenaufnahmeschlittens mit Detaildarstellungen verschiedener Sicherungseinheiten.

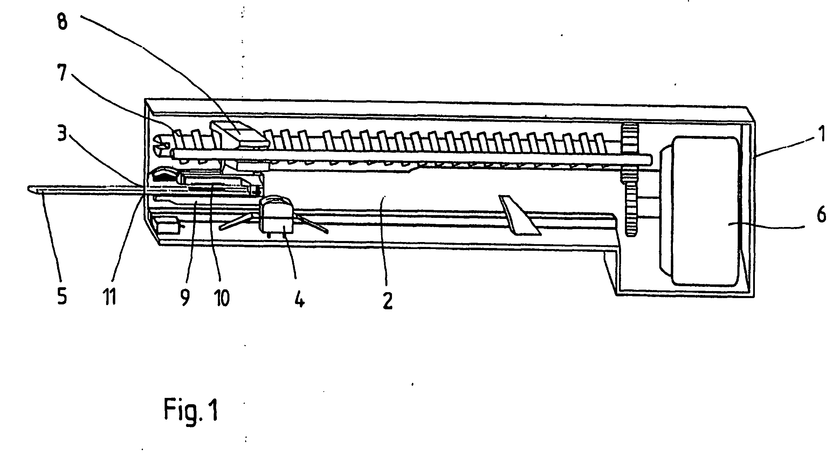

Eine Kartenlesevorrichtung 1 weist im gezeigten Ausführungsbeispiel einen schlitzförmigen Aufnahmeraum 2 auf. Dieser Aufnahmeraum ist über einen Schlitz 3 in einer frontseitigen Wand zugänglich. Im Inneren ist ein Schreib-/Lesekopf 4 für einen auf einer Karte angeordneten Magnetstreifen positioniert. Eine mit 5 bezeichnete Karte ist gemäß Fig. 1 in eine erste Einschubposition in den Schlitz 3 eingeführt. In diesem Zustand befindet sich ein nicht sichtbarer, kartenseitiger Speicherchip in Kontaktverbindung mit einer Speicherchipkontakteinrichtung 10. Diese Kontakteinrichtung 10 ist in einem Schlitten 9 angeordnet, an welchem eine über eine Nockenbahn geführte Klemmzunge 11 befestigt ist. In dieser Einschubposition ist der Speicherchip in Lese-/Schreibkontakt, ohne daß ein weiterer Kartentransport stattfindet.

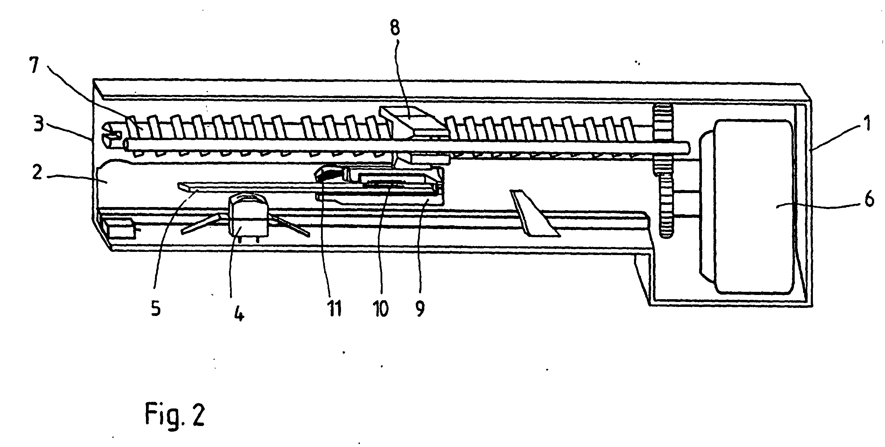

Soll nun ein weiterer Transport stattfinden, wird über einen Motor 6 eine Spindel 7 in Drehung versetzt und bewegt einen Spindelwagen 8, an welchem der Schlitten 9 befestigt ist. Die Klemmzunge 11 wird über die Nockenbahn die Karte 5 klemmend auf diese gepreßt und die Karte wird mit ihrem nicht sichtbaren Magnetstreifen über den magnetischen Schreib-/Lesekopf 4 geführt und durch die Relativbewegung ausgelesen bzw. beschrieben. Zur Ausgabe der Karte wird die Spindel in die andere Richtung in Drehung versetzt und die Karte wieder ausgeschoben, bis von der in Fig. 2 gezeigten Position die Karte wieder die in Fig. 1 gezeigte Position erreicht hat.

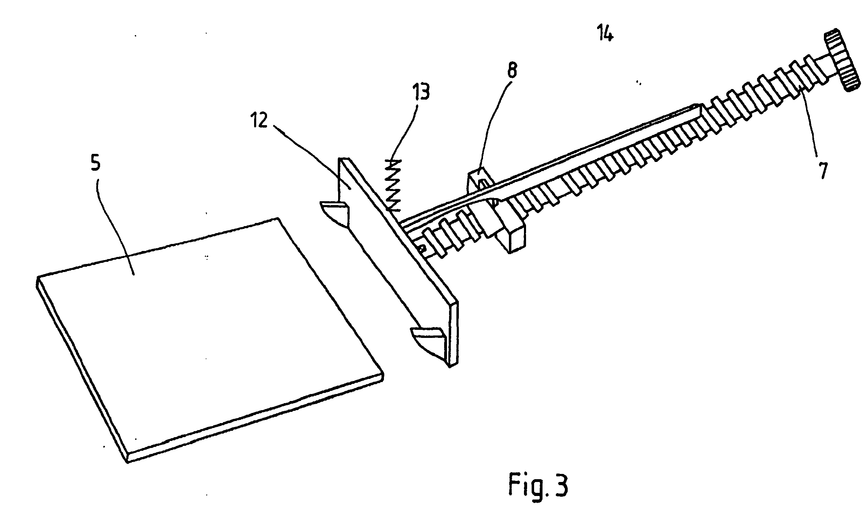

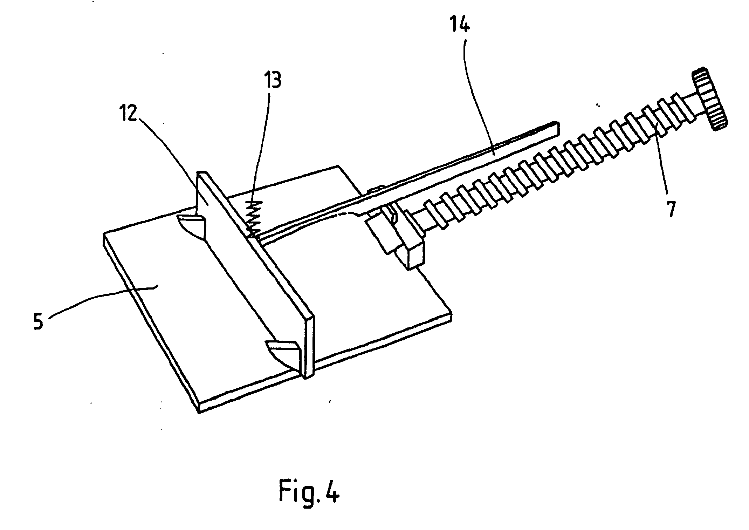

Gemäß den Fig. 3 und 4 weist die erfindungsgemäße Vorrichtung eine einfache Verschlußklappe 12 zum Verschließen des in den Aufnahmeschacht führenden Schlitzes an der Gehäusefront. Die Platte 12 ist federbelastet geschlossen. An der Klappe ist eine Nockenstange angeordnet, die dem Mitnehmer auf der Spindel 7 zusammenwirkt. Die Nockenstange ist mit dem Bezugszeichen 14 versehen. Wird eine Karte 5 in den Schlitz eingeführt, wird zunächst durch kreisbogenförmige Ansetzer an der Klappenaußenseite die Klappe angehoben. Dadurch wird der Mitnehmer freigegeben und ein Verfahren ist überhaupt möglich. Ohne dieses Anheben kann der Mitnehmer nicht verfahren werden, da er gegen den Nockenanschlag der Stange 14 geführt wird. Der Mitnehmer wird auch als Spindelwagen bezeichnet, dem der Schlitten angeordnet ist.

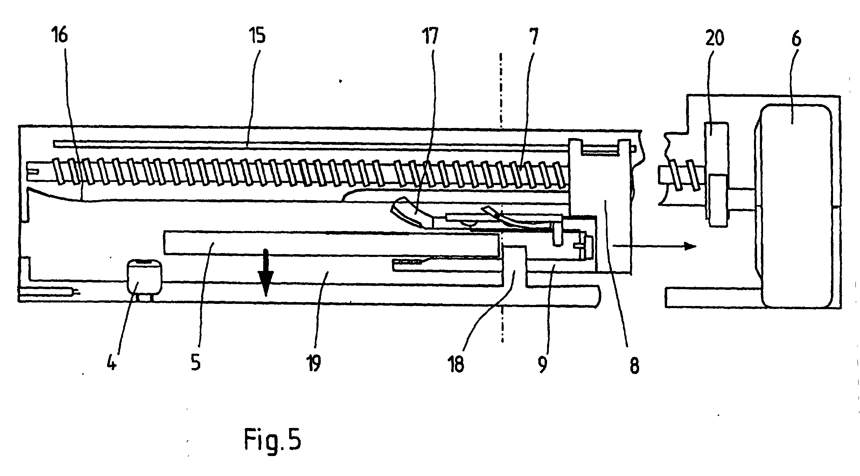

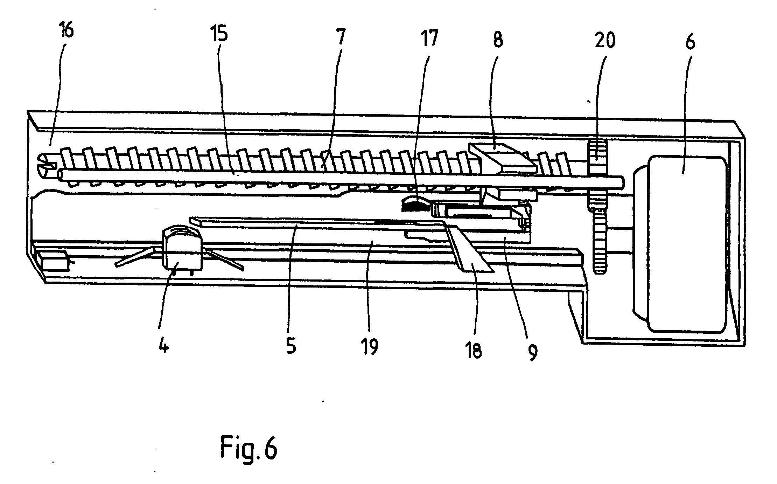

Gemäß Fig. 5 und 6 ist gezeigt, wie der Einzug beispielsweise einer illegalen Karte erfolgen kann, wozu erfindungsgemäß eine bestimmte Konstruktion vorgeschlagen ist. Es sind das Kartenlesegerätgehäuse gezeigt, an dessen hinteren Ende im gezeigten Ausführungsbeispiel ein Motor 6 angeordnet ist. Ein Getriebe 20 verbindet den Motor mit der Spindelstange 7. Eine Führungsstange 15 sorgt dafür, daß der Spindelwagen 8 beim Verfahren nicht verkantet. Am Spindelwagen 8 sitzt der Schlitten 9. Dieser weist wiederum die an der Nockenbahn 16 geführte Klemmnase 17 auf. Weiterhin trägt der Schlitten den Kontaktkopf für einen Speicherchip. Im gezeigten Ausführungsbeispiel ist die Karte 5 über den magnetischen Schreib-/Lesekopf 4 verfahren worden. Sie ist als illegal oder aus irgendwelchen Gründen einziehbar identifiziert worden, In diesem Falle wird der Schlitten 9 weiter in das Gehäusehintere verfahren, so daß die Karte 5 gegen einen Anschlag 18 stößt und der Schlittenwagen von der Karte abgezogen wird. Zu diesem Zweck weist die Nockenbahn 16 eine Freigabe für die Klemmnase 17 auf. Nach Abziehen des Schlittens 9 von der Karte 5 kann die Karte in den Aufnahmeraum 19 fallen und im Gerät bis zur Entnahme verbleiben. Weiterhin kann ein Quertransport erfolgen oder ein Vertikalschacht angeordnet sein.

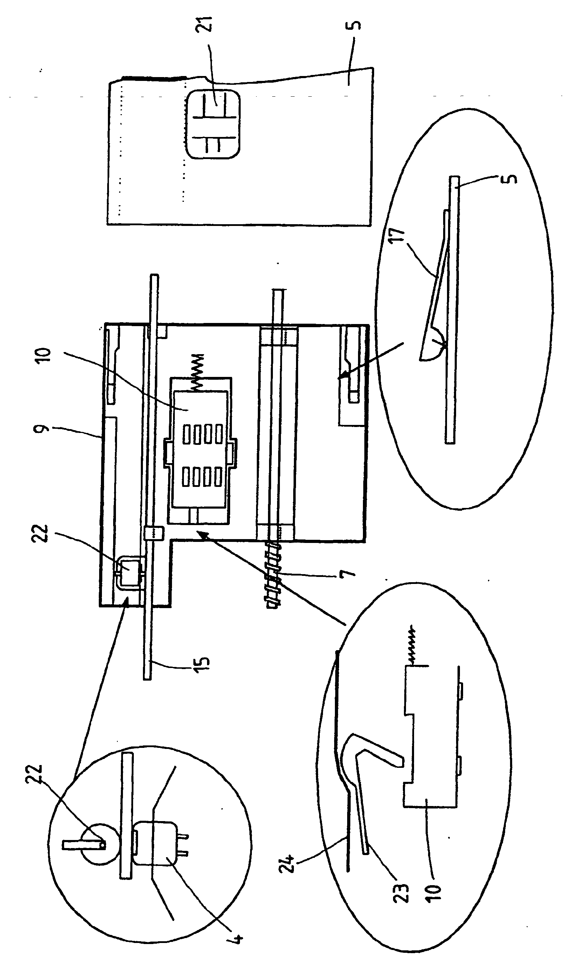

Fig. 7 zeigt den Schlitten 9 in zentraler Darstellung mit dem Kontaktkopf 10 für einen Speicherchip 21, welcher sich auf der Karte 5 befindet. Wird die Karte 5 in einen Schlitz in das Kartengehäuse eingeschoben kommt das Kartenende der Karte 5 mit dem Schlitten in Kontakt und wird auf diesen draufgeschoben, bis das Kartenende gegen die Nase 23 stößt und dabei den Speicherchip 21 auf das Kontaktfeld 10 drückt. Auf diese Weise ist bereits an dieser Stelle eine sehr gute Kontaktierung erfolgt. Wird nun die Karte in das Gehäuse eingezogen, wird weiterhin durch die Klemmnase 17, die durch eine nicht gezeigte Nockenbahn heruntergedrückt wird, die Karte eingeklemmt. Weiterhin wird die Karte durch eine Andruckrolle 22 auf den magnetischen Schreib-/Lesekopf gepreßt, so daß auch hier ein einfaches und sicheres Lesen erfolgen kann. Die beschriebenen Maßnahmen sind äußerst einfache und wirtschaftliche jedoch sehr effektive Maßnahmen.

Das beschriebene Ausführungsbeispiel dient nur der Erläutenrng und ist nicht beschränkend.

### Bezugszeichenliste

- 1: Kartenlesevorrichtung
- 2: Aufnahmeraum
- 3: Schlitz
- 4: Schreib-/Lesekopf / magnetisch
- 5: Karte
- 6: Motor
- 7: Spindel
- 8: Spindelwagen
- 9: Schlitten
- 10: Kontaktkopf/Speicherchip
- 11: Klemmzunge
- 12: Klappe
- 13: Feder
- 14: Nockenstange
- 15: Führungsstange
- 16: Nockenbahn
- 17: Klemmnase
- 18: Anschlag
- 19: Aufnahmeraum
- 20: Getriebe
- 21: Speicherchip
- 22: Andruckrolle
- 23: Andrucknase
- 24: Nockenbahn

## Patentansprüche

1. Kartenlesevorrichtung (1) mit einem im wesentlichen schlitzförmigen Aufnahmeraum (2) und Schreib- und/oder Leseeinheiten (4) für mit Speicherelementen (5) versehene, kartenförmige, Speicherchips enthaltende Datenträger, welche in dem Aufnahmeraum zur Positionierung der Speicherelemente relativ zu den Schreib- und/oder Leseeinheiten mittels eines durch einem Motor (6) angetriebenen Kartenantriebs ein- bzw. ausschiebbar sind, wobei der Kartenantrieb einen im Aufnahmeraum verfahrbaren Kartenaufnahmeschlitten (9), umfaßt, und wobei am Kartenaufnahmeschlitten (9) ein Klemmelement (11; 17) zum Festhalten der Karte angeordnet ist,
**dadurch** gekennzeiehnet, daß
das Klemmelement (11; 17) über eine Nockenbahn (16) von einer Freigabeposition in Richtung der karte zu einer Klemmposition und umgekehrt geführt wird.

2. Vorrichtung nach Anspruch 1
**dadurch gekennzeichnet, dass** eine dieser Schreib-und/oder Leseeinheiten durch eine Relativbewegung mit der Karte einen kartenseitigen Magnetstreifen schreiben und/oder lesen kann.

3. Vorrichtung nach Anspruch 1 oder 2, **dadurch gekennzeichnet, daß** der Kartenantrieb eine Spindelstange umfaßt.

4. Vorrichtung nach Anspruch 3, **dadurch gekennzeichnet, daß** die Spindelstange mit dem Motor über ein Zahnradgetriebe verbunden ist.

5. Vorrichtung nach Anspruch 3 oder 4,
**dadurch gekennzeichnet, daß** die Spindelstange bis zur Gehäusevorderseite ragt, um zu ermöglichen, bei einem Stromausfall oder einer Motorfehlfunktion oder einem sonstwie begründeten energielosen Zustand Karten aus dem Lesegerät entfernen zu können.

6. Vorrichtung nach einem der vorhergehenden Ansprüche, **dadurch gekennzeichnet, daß** der Schlitten zur Aufnahme eines Kartenendbereichs ausgebildet ist.

7. Vorrichtung nach einem der vorhergehenden Ansprüche, **dadurch gekennzeichnet, daß** der Kartenaufnahmeschlitten mittels eines Mitnehmers mit dem Kartenantrieb verbunden ist.

8. Vorrichtung nach einem der vorhergehenden Ansprüche, **dadurch gekennzeichnet, daß** der Kartenaufnahmeschlitten eine Kontakteinrichtung für kartenseitige Speicherelemente aufweist.

9. Vorrichtung nach einem der vorhergehenden Ansprüche, **dadurch gekennzeichnet, daß** diese an einem in den Aufnahmeraum führenden Einführschlitz ein Klappenelement aufweist.

10. Vorrichtung nach Anspruch 9, **dadurch gekennzeichnet, daß** das Klappenelement mit einem Sperrelement in einer geschlossenen Position verwählbar ist.

11. Vorrichtung nach Anspruch 10, **dadurch gekennzeichnet, daß** das Sperrelement über eine Nockenbahn mit dem Mitnehmer verbunden ist.

12. Vorrichtung nach einem der vorhergehenden Ansprüche, **dadurch gekennzeichnet, daß** diese eine an den Aufnahmeraum anschließende Erweiterung für die Lagerung von Karten aufweist.

13. Vorrichtung nach Anspruch 12, **dadurch gekennzeichnet, daß** die Erweiterung in Karteneinschubrichtung hinter einer Schreib-/Leseposition angeordnet ist.

14. Vorrichtung nach einem der Ansprüche 12 oder 13, **dadurch gekennzeichnet, daß** die Erweiterung ein Vertikalschacht ist.

15. Vorrichtung nach einem der vorhergehenden Ansprüche, **dadurch gekennzeichnet, daß** diese einen Ausschiebeanschlag aufweist, welcher die Karte ab einer vorgegebenen Einzugsposition hält, während der Schlitten durch eine fortgeführte Einfahrbewegung von der Karte abgezogen wird.

## Claims

1. Card reading device (1) with an essentially slot-shaped receiving cavity (2) and writing and/or reading units (4) for card-shaped data processing carriers containing memory chips and equipped with storage elements, which can slide in and out in the receiving cavity for the positioning of the storage elements (5) relative to the writing and/or reading units by means of a card drive driven by a motor (6), wherein the card drive is comprised of a card receiving carriage (9) that is moveable within the receiving cavity, and wherein a clamping element (11; 17) is arranged on the card receiving carriage (9) for retaining the card,
**characterized in that**
the clamping element (11; 17) is guided via a cam track (16) in a releasing position in the direction of the card to a clamping position, and vice versa.

2. The device according to claim 1, **characterized in that** one of the said writing and/or reading units can write and/or read a magnetic strip on the side of the card by means of a relative movement with the card.

3. The device according to claims 1 or 2, **characterized in that** the card drive is comprised of a tie bar.

4. The device according to claim 3, **characterized in that** the tie bar is connected to the motor via a gear drive.

5. The device according to claims 3 or 4, **characterized in that** the tie rod protrudes up to the front of the housing in order to enable the removing of card from the reading device in case of a power failure, or a malfunction of the motor, or an otherwise justified de-energized state.

6. The device according to one of the previous claims, **characterized in that** the carriage is embodied in order to receive a card end area.

7. The device according to one of the previous claims, **characterized in that** the card receiving carriage is connected to the card drive by means of a tappet.

8. The device according to one of the previous claims, **characterized in that** the card receiving carriage has a contact device for storage elements on the side of the card.

9. The device according to one of the previous claims, **characterized in that** the same has a flap element at an insertion slot leading into the receiving cavity.

10. The device according to claim 9, **characterized in that** in a closed position, the flap element is adjustable with a locking element.

11. The device according to claim 10, **characterized in that** the locking element is connected to the tappet via a cam track.

12. The device according to one of the previous claims, **characterized in that** the same has an extension adjacent to the receiving cavity for the storage of cards.

13. The device according to claim 12, **characterized in that** the extension is arranged behind a writing/reading position in the direction of the card insertion.

14. The device according to one of the claims 12 or 13, **characterized in that** the extension is a vertical stack.

15. The device according to one of the previous claims, **characterized in that** the same has a slide-off limit stop retaining the card, starting at a predetermined retracting position, while the carriage is pulled off of the card by means of a continuous running-in movement.

## Revendications

1. Dispositif de lecture de cartes (1) comprenant un espace de logement (2) sensiblement en forme de fente et des unités d'écriture et/ou de lecture (4) pour des supports de données contenant des puces à mémoire, en forme de cartes, munis d'éléments de mémoire (5), les supports de données étant susceptibles d'être introduits dans et extraits de l'espace de logement pour le positionnement des éléments à mémoire par rapport aux unités d'écriture et/ou de lecture, au moyen d'un entraînement de cartes, entraîné par un moteur (6), l'entraînement de cartes comprenant un chariot de logement de cartes (9) déplaçable dans l'espace de logement et, sur le chariot de logement de cartes (9), est disposé un élément de serrage (11 ; 17) pour la fixation de la carte,
**caractérisé en ce que** l'élément de serrage (11; 17) est guidé, par l'intermédiaire d'une piste à cames (16), dans la direction de la carte, d'une position de libération à une position de serrage et inversement.

2. Dispositif selon la revendication 1, **caractérisé en ce que** cette unité d'écriture et/ou de lecture, grâce à un déplacement relatif avec la carte, peut écrire et/ou lire une bande magnétique située côté carte.

3. Dispositif selon la revendication 1 ou 2, **caractérisé en ce que** entraînement de cartes comprend une tige filetée.

4. Dispositif selon la revendication 3, **caractérisé en ce que** la tige filetée est reliée au moteur par l'intermédiaire d'une transmission à roue dentée.

5. Dispositif selon la revendication 3 ou 4, **caractérisé en ce que** la tige filetée va jusqu'à la face avant de boîtier, pour permettre, en cas de panne électrique ou de disfonctionnement du moteur, ou d'un état sans énergie dont la cause est quelconque, de pouvoir enlever des cartes de l'appareil.

6. Dispositif selon l'une des revendications précédentes, **caractérisé en ce que** le chariot est réalisé pour recevoir une zone d'extrémité de carte.

7. Dispositif selon l'une des revendications précédentes, **caractérisé en ce que** le chariot de logement de cartes est relié à l'entraînement de cartes, à l'aide d'un organe d'entraînement

8. Dispositif selon l'une des revendications précédentes, **caractérisé en ce que** le chariot de logement de cartes présente un dispositif de contact, pour des éléments à mémoire situés côté carte.

9. Dispositif selon l'une des revendications précédentes, **caractérisé en ce que** celui-ci présente un élément à volet, sur une fente d'insertion menant dans l'espace de logement.

10. Dispositif selon la revendication 9, **caractérisé en ce que** l'élément à volet est sélectionnable avec un élément de blocage en une position fermée.

11. Dispositif selon la revendication 10, **caractérisé en ce que** l'élément de blocage est relié à l'organe entraînement par l'intermédiaire d'une piste à came.

12. Dispositif selon l'une des revendications précédentes, **caractérisé en ce que** celui-ci présente une extension, se raccordant à l'espace de logement, pour stocker des cartes.

13. Dispositif selon la revendication 12, **caractérisé en ce que** l'extension est disposée derrière une position d'écriture/lecture, en observant dans la direction d'insertion de la carte.

14. Dispositif selon l'une des revendications 12 ou 13, **caractérisé en ce que** l'extension est un puits vertical.

15. Dispositif selon l'une des revendications précédentes, **caractérisé en ce que** celui-ci présente une butée d'extraction, maintenant la carte à partir d'une position d'insertion prédéterminée, tandis que le chariot est extrait de la carte en continuant à procéder à un déplacement d'insertion.
